# EUROPEAN PATENT SPECIFICATION

(11) **EP 4 247 221 B1**
(45) Date of publication and mention of the grant of the patent: **06.11.2024**
(21) Application number: 21824016.6
(22) Date of filing: 15.11.2021
(51) Int. Cl.: A47B 57/20, F16B 12/24, F16B 12/26

(54) **ROTATING SHELF-SUPPORTING DEVICE FOR REMOVABLY SUPPORTING FURNITURE SHELVES**
DREHBARE REGALSTÜTZVORRICHTUNG ZUR LÖSBAREN HALTERUNG VON MÖBELREGALEN
DISPOSITIF DE SUPPORT D'ÉTAGÈRE ROTATIF PERMETTANT DE SUPPORTER DES ÉTAGÈRES AMOVIBLES DE MEUBLE

(30) Priority: 19.11.2020 IT 202000027810
(43) Date of publication of application: 27.09.2023
(73) Proprietor: LEONARDO S.r.l., 22060 Figino Serenza (CO) (IT)
(72) Inventor: CATTANEO, Carlo, 22060 Figino Serenza (CO) (IT)
(74) Representative: Dragotti & Associati S.R.L.
(86) International application number: PCT/IB2021/060541
(87) International publication number: WO 2022/106974

(56) References cited:
- DE-B4- 10 027 015
- IT-A1- 201900 005 830

## Description

### FIELD OF THE INVENTION

The present invention relates to a shelf-supporting device for supporting furniture shelves for the reversible and easily removable connection of a shelf to the opposite shoulders of a piece of furniture.

The device according to the present invention responds to the need, felt in the sector, for being able to provide furniture shelves with supporting devices that create a simple and effective connection with the shoulders of a piece of furniture, that are miniaturized so as to reduce the aesthetic impact to the minimum and possibly disappearing completely from sight when the shelf is assembled, but at the same time offering a safe connection of the shelf to the shoulders of the furniture, preventing undesired accidental disengagements.

### STATE OF THE ART

Devices of this type are commonly called shelf brackets in the field, and exert the function of stably but removably supporting and fixing a horizontal element (shelf) of a piece of furniture between two vertical elements commonly called shoulders. Said shelves and said shoulders are arranged perpendicular to each other.

Said shelves and said shoulders are arranged perpendicular to each other.

Shelf brackets of this type, configured for being inserted into a housing seat formed within the thickness of a shelf from which only the pin generally protrudes, are known from the state of the art.

The document DE 10027015 describes a concealed floor mounting for shelving with an outer case fixed on a bore in the floor. The case contains a sprung rod which engages in one of a row of holes formed in the base of the shelving. The sprung rod has a support tip, slide section, spring and mounting cap. The support tip can have a rounded lower surface to fit the corresponding hole in the shelving.

The document IT 201900005830 describes a device for supporting a removable panel with respect to a wall of an article of furniture. The device comprises a hollow body, a movable element slidably arranged inside the hollow body at least between a first operating position, wherein a terminal portion of the movable element is projecting from the hollow body, and a second operating position, and a main elastic element interposed between the bottom and the movable element and configured to move the latter towards the first operating position. The device further comprises at least one return elastic element active on the movable element to return it from the first operating position to the second operating position. The return elastic element is configurable between an inactive condition and an active condition to return the movable element to the second operating position following a triggering movement.

Some of these known shelf-supporting devices comprise means for moving the pin which are kept in the operating position by opposing means, such as for example a spring, and can be actuated manually by the user in the retraction movement of the pin which allows the pin to be released from the housing seat of the pin provided in the shoulder of the furniture.

Other devices, on the other hand, provide that the pin be released from the housing seat of the pin provided in the shoulder of the furniture with an action whereby the operator simply pushes the shelf upwards.

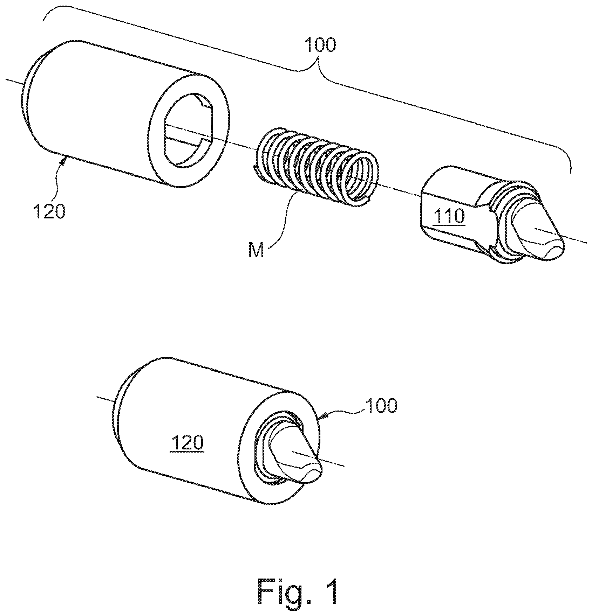

An example of this type of shelf bracket is the device illustrated in Italian patent application nr. IT201900020124, in the name of the same Applicant, which relates to a shelf-supporting device of which a possible preferred embodiment is shown in Figure 1.

This known type shelf-supporting device **100** allows the reversible connection of a shelf to the opposite shoulders of a piece of furniture and comprises a main body **120** which houses a pin **110** in its interior, movable along a longitudinal axis **X.**

The pin **110** can be translated along said axis X against the action of opposing means composed, in the example, of the helical spring **M,** between a retracted non-operating position in which the pin does not protrude from the main body **120** or protrudes for a short distance, and an operating position in which the free end or tip **P** of the pin **110** protrudes from said shelf for a distance sufficiently long for it to be inserted into the housing seat of said pin formed on one of said shoulders and provide a stable coupling, even if reversible between the shelf and the shoulders.

In order to make the coupling with the shoulder of the furniture reversible, the device of the known type provides that the tip **P** of the pin **110** ends with a tilted surface or tilted plane **Pa** suitable for cooperating with the entry edge of said seat so that, when said shelf is pushed upwards, the pin **110** becomes disengaged from said seat, overcoming the action of the opposing means, in the example consisting of the spring **M,** allowing the shelf to be removed from the piece of furniture.

This solution, which is excellent when used with assembled furniture, has proved however to be not without drawbacks.

One of the drawbacks, in fact, affecting the shelf-supporting devices of the type known from the state of the art described above consists in the fact that they are subject to accidental disengagement.

More specifically, the shelf-supporting devices of the type described above can be easily released by pushing upwards, and this can lead to the accidental release of the shelf, for example during the transportation of the furniture itself.

The furniture is in fact generally transported with the shelves assembled to the shoulders, but, during the transportation phase of the furniture, it is easily and frequently overturned with respect to its position of normal use. In this case, the weight of the shelves equipped with the shelf brackets of the known type described so far is sufficient for ensuring that the pins of the shelf brackets become disengaged from their respective seats provided in the shoulders of the furniture, exactly as what happens when the operator deliberately pushes the shelf upwards to remove it from the shoulders of the furniture.

A further drawback affecting the shelf-supporting devices of the known type, including that described above, relates to the fact that they are generally designed for being assembled inside the shelf in a predetermined way, forcing the operator to assemble the shelf to the shoulders of the piece of furniture according to a predetermined, non-modifiable movement. As already mentioned, for example, the shelf-supporting device of the type known from Italian patent application nr. IT201900020124 in the name of the same Applicant requires that the shelf be assembled on the furniture by inserting it from above with a vertical movement, the same vertical movement, this time upwards, which allows the release of the shelf brackets and the disengagement of the shelf from the shoulders.

### SUMMARY OF THE INVENTION

In light of the above, the undertaking of the present invention is to solve the drawbacks affecting shelf-supporting devices of the type known from the state of the art.

In particular, the undertaking of the present invention is to provide a shelf-supporting device capable of completely eliminating the risk of accidental disengagement of the shelf from the shoulders of the furniture.

Within this undertaking, the objective of the present invention is to provide a shelf-supporting device which avoids the accidental release of the shelf from the shoulders of the furniture due to the weight of the shelf itself, for example when the furniture is overturned, as often occurs in the transportation phase of the furniture itself.

A further objective of the present invention is to provide a shelf bracket that is more versatile, as it can be assembled in the shelf so as to allow the operator to decide whether to proceed with the assembly from the top or the front of the shelf to the shoulders of the furniture.

Yet another objective of the present invention is to provide a shelf bracket that is both versatile and easy to use, capable of minimizing, if not completely eliminating, the aesthetic impact, proving to be invisible both when used with shelves destined for being seen from above by the user, and also when used with shelves destined for being seen from below, allowing any trace of the presence of the device and in particular the presence of manoeuvring holes, to be completely eliminated from sight, and which can be easily associated with the shoulders of a piece of furniture and easily removable from the same, in order to allow a simple, fast and immediate assembly and/or disassembly of the shelf without the use of any manoeuvring tool.

The above-mentioned undertaking, as also the above-mentioned objectives and others that will appear more evident further on, are achieved by a shelf-supporting device for the reversible connection of a shelf to the shoulders of a piece of furniture according to the enclosed claim 1; the invention also relates to the combination of this type of shelf bracket and a tool for its assembly, according to the respective enclosed claim.

Further characteristics of the preferred embodiments of the device according to the present invention described in the present patent application are subject of the dependent claims.

### LIST OF FIGURES

Further characteristics and advantages will become more evident from the description of a preferred but non-exclusive embodiment of the supporting device for furniture shelves for the reversible connection of a shelf to the shoulders of a piece of furniture illustrated by way of non-limiting example with the aid of the attached drawings in which:
figure 1 is an exploded view of a shelf-supporting device of the type known from the state of the art;
figure 2 shows a perspective view of the components of the shelf-supporting device according to the present invention and of the seat formed within the thickness of a shelf;
figures 3 and 3A are two sectional views respectively illustrating the device in the unblocking and blocking positions of the shelf with respect to the furniture;
figure 4 illustrates a shelf bracket condition according to the present invention inserted in a shelf and arranged according to a first operating position;
figure 5 illustrates the rotation operation of the main body of the shelf-supporting device according to the invention with respect to the relative fixed bush inserted in the shelf, said rotation being effected by means of a tool at least partially shaped as a thin foil;
figure 6 illustrates the shelf bracket of figure 4 inserted in a shelf and arranged according to a second blocking position due to the rotation of the main body of the device with respect to its bush according to the directions indicated by the arrow F1 of figure 5.

### DETAILED DESCRIPTION OF THE INVENTION

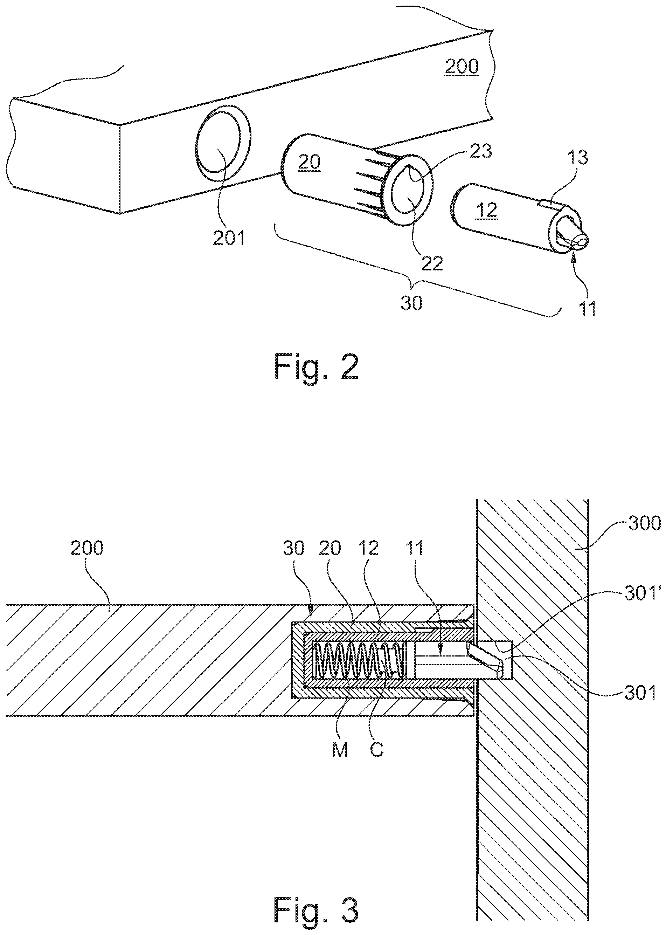

With particular reference to the attached figures 2 to 6, a shelf-supporting device 30 is described for the reversible connection of a shelf 200 to the opposite shoulders 300 of a piece of furniture, according to a preferred embodiment of the present invention.

The shelf-supporting device 30 according to the present invention is of the type suitable for creating the connection by means of a pin 11 associated with the shelf 200 and configured for protruding from the transverse edge 201 of said shelf 200 and suitable for being inserted into a corresponding housing hole or seat 301 formed on the shoulder 300 of a piece of furniture.

The shelf-supporting device **30** according to the present invention is of the type suitable for being inserted into a seat **201** formed within the thickness of said shelf **200** and for this purpose comprises a main body **12** with which a substantially longitudinal pin **11** is slidingly associated, preferably but not exclusively substantially cylindrical, movable along a longitudinal axial direction **X** against the action of opposing means **M** between an advanced operating position in which said pin **11** protrudes from said main body **12** and, when the device is assembled in a shelf, from said shelf **200** so as to be able to be inserted into a housing seat **301** formed on one of said shoulders **300,** and a retracted non-operating position in which said pin **11** does not protrude from said main body **12,** and consequently does not protrude from said shelf **200** when the device is associated with a shelf or protrudes so as to be able to be in any case released from said housing seat **301** of said shoulder **300.**

The pin **11** advantageously ends with a free end or tip **P** comprising a tilted surface **Pa** suitable for cooperating with the entry edge of said seat **301,** as will be described in more detail hereunder.

The shelf-supporting device **30** according to the invention is characterized in that it further comprises a bush **20** which can be fixedly inserted into said seat **201** formed within the thickness of said shelf **200,** so that the main body **12** is in turn inserted into the axial cavity **22** of said bush **20** rotatably with respect to the same between a first operating position **A** which allows the engagement and release of the shelf **200** to the shoulders **300** of the furniture, and a second blocking position **B** suitable for avoiding the accidental release of the shelf from the shoulders.

The shelf-supporting device **30** according to the present invention is advantageously configured so that when the main body **12** is coupled with the bush **20** in said first operating position **A,** the tilted surface **Pa** of said pin **11** faces upwards, wherein the expression "upwards" means facing the upper surface of the shelf, i.e. the surface destined for facing upwards when the shelf is assembled to the furniture, and the furniture is correctly positioned on the ground.

In this way, the tilted surface **Pa** cooperates with the upper edge **301'** for the entry of the seat **301** when the shelf bracket **30** is positioned in correspondence with the housing seat **301,** to allow the release of the shelf **200** from the shoulders **300** simply due to an upward thrust.

When the shelf **200** is pushed upwards, in fact, the pin **11** withdraws due to the interaction between the tilted surface **Pa** and the upper edge **301'** of said seat **301.**

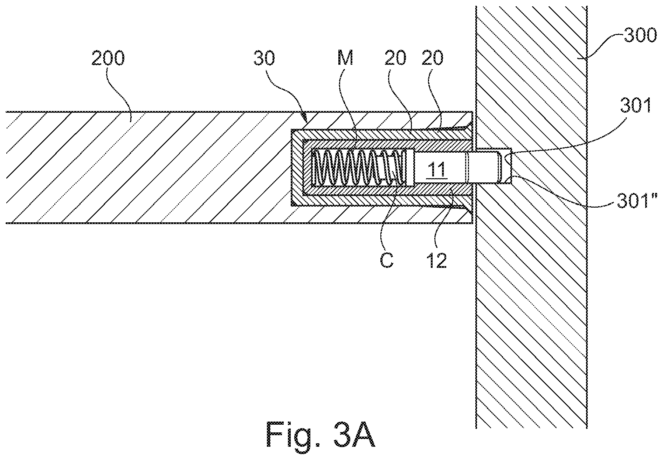

Vice versa, when the main body **12** of the device **30** is rotated into said second blocking position **B,** the tilted surface **Pa** of the pin **11** is no longer facing upwards, it can be rotated by 10°, or 20°, or by 45°, preferably about 90° with respect to the vertical direction corresponding to the operating position **A,** and is therefore unable to cooperate with the upper entry edge **301'** of the seat **301** when said shelf **200** is pushed upwards (figure 3A).

In this way, even when the furniture is overturned accidentally, as often happens when transporting the furniture with the shelves assembled, and the weight of the shelf itself exerts a direct push upwards, the shelf will not be released from the shoulders. For this purpose, it is not necessary that all four shelf-supporting devices usually present on the shelf itself be rotated to the blocking position **B,** as it is sufficient for at least one, preferably two, of said shelf-supporting devices to be rotated into the blocking position for preventing the accidental disengagement of the shelf from the shoulders of the furniture.

In said second blocking position **B,** the tilted surface **Pa** of said pin **11** is preferably tilted by approximately 90° with respect to the first operating position **A,** so as to be able to cooperate with the side entry edge **301"** of said seat **301** and allow the release of the shelf **200** from the shoulder **300** when said shelf **200** is moved horizontally.

Horizontal direction refers to a direction substantially perpendicular to the axial advancement direction **X** of the pin, and relates to the position of the shelf with respect to the shoulders, which is horizontal when the piece of furniture is correctly positioned on the ground.

In this circumstance, the pin **11** withdraws due to the interaction between the tilted surface **Pa** and the side edge **301"** of the seat **301** when the shelf is moved horizontally.

Said bush **20** and said main body **12** advantageously comprise positioning means for said main body **12** suitable for allowing the stable but reversible positioning of said main body **12** in said first operating position **A.**

Said positioning means **23, 13** are suitable for preventing the rotation of said main body **12** with respect to said bush **20** when the main body is in said first operating position **A.**

In a preferred embodiment of the present invention, illustrated by way of non-limiting example in the attached figures, said positioning means comprise an engagement tooth **13** positioned on the outer surface of said main body **12,** and a corresponding engagement seat **23** formed on the internal surface of said axial cavity **22** of said bush, said engagement tooth **13** being configured for being inserted into said engagement seat **23.**

In this way, the main body **12** of the device can be rotated with respect to the bush **20,** which, on the other hand, is inserted fixed inside the seat **201** formed within the thickness of the shelf **200,** preferably by means of a tool **40** configured for gripping said tip **P** of said pin **11,** due to the fact that the main body **12** and the bush **20** of the device are generally assembled in the seat **201** flush with the edge of the shelf **202,** without protruding from the same.

Said tool **40** can advantageously comprise at least a portion configured as a thin foil **41** in which a seat **42** for housing said tip **P** of the pin **11** is formed, the thin foil **41** having a thickness suitable for allowing its insertion between the edge **202** of said shelf **200** from which the pin **11** of the shelf-supporting device **30** protrudes, and the shoulder **300** of the piece of furniture so as to be able to rotate said main body **12** with respect to said bush **20** even after said pin **11** has been inserted into said housing seat **301** formed in the shoulder **300** due to the thrust exerted by the opposing means **M.**

The present invention therefore also relates to a method for connecting a shelf **200** to the shoulders **300** of a piece of furniture, wherein said shelf **200** is equipped with a plurality of shelf-supporting devices **30** according to what has been described so far.

The method according to the invention provides for positioning said plurality of shelf-supporting devices **30** arranged according to said first operating position **A** wherein said tilted surface **Pa** of said pin **11** faces upwards, i.e. towards the upper surface of the shelf.

By moving said shelf **200** with respect to said shoulder **300** so as to position each of said pins **11** of said shelf-supporting devices **30** in correspondence with the corresponding housing seat **301** formed in the shoulder **300** of the piece of furniture, so that said opposing means **M** push the pin **11** into the seat **301.** When the **pin 11** is inserted in the corresponding housing seat **301** formed in the shoulder **300,** by rotating the main body **12** of at least one of said plurality of devices **30** with respect to its bush **20,** the respective pin **11** is brought into said second blocking position **B.**

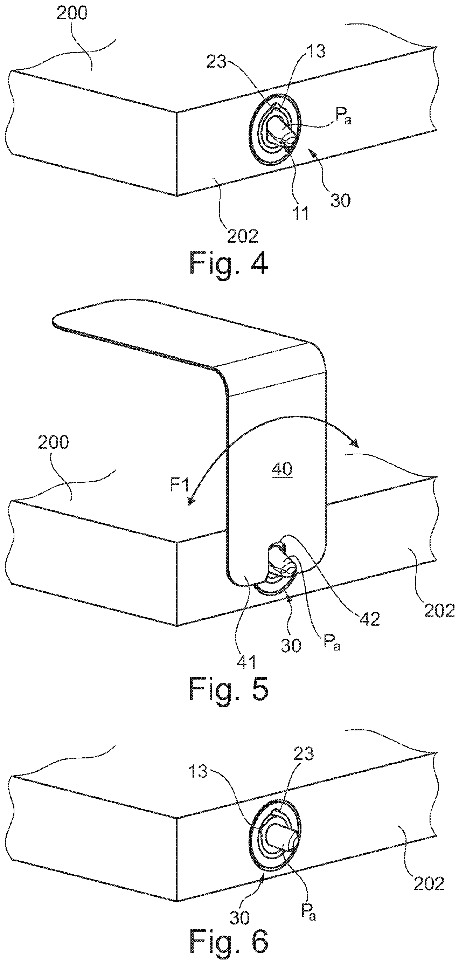

As indicated by the arrow F1 visible in figure 5, the blocking position **B** can indifferently correspond to the pin rotated towards the front of the furniture, and in this case the shelf can be removed from the furniture with a horizontal movement, or towards the inside of the furniture, and in this case the shelf is completely irremovable.

In order to prevent the undesired disengagement of the shelf from the shoulders, for example due to the weight of the shelf itself when, as often happens during transportation operations, the furniture with the shelves assembled is overturned, it is sufficient to bring a device **30** into the blocking position **B,** the operator however can decide to block more than one device.

The step of the method which provides for the rotation of the main body **12** of said at least one shelf-supporting device **30** with respect to its bush **20,** can advantageously be carried out by means of the tool **40** described above, so that it can be effected with the shelf assembled.

As is evident from the description provided above, the shelf-supporting device **30** according to the present invention allows numerous advantages to be obtained.

If, in fact, the operator positions all the shelf-supporting devices according to the present invention present on the same shelf in the operating position **A,** the shelf can be associated with the shoulders of a piece of furniture and can be removed from them simply with an upward movement of the shelf itself.

If, on the other hand, one or more of the shelf-supporting devices according to the present invention present on the same shelf are positioned in the operating position **A** while at least one of the other devices acting on the same shelf is positioned in the blocking position **B,** the shelf cannot be removed from the shoulders of the furniture either through an upward thrust or through a horizontal extraction movement of the shelf from the furniture.

If, on the other hand, all of the shelf-supporting devices according to the present invention present on the same shelf are arranged in the second blocking position **B,** by rotating them by 90° with respect to the operating position **A** towards the front of the furniture, the shelf can be removed from the furniture by means of a horizontal extraction movement of the shelf from the furniture, without the need for further interventions on the devices by the operator.

Similarly, if all of the shelf-supporting devices according to the present invention present on the same shelf are arranged in the second blocking position **B,** by rotating them by 45° with respect to the operating position **A,** the shelf can be removed by tilting it at 45°, and so forth.

If, on the other hand, all of the shelf-supporting devices are arranged in the second blocking position **B,** by rotating them by 90° or 45° or another angle, with respect to the operating position **A** towards the bottom of the furniture, and the furniture is provided with a bottom or lining or is leaning against a wall, the shelf cannot be removed from the furniture even if all the shelf-supporting devices have all been rotated by the same angle.

The objectives mentioned in the preamble of the present description have thus been achieved, namely for producing a reversible shelf bracket, practically invisible from the outside, which can be safely associated with the piece of furniture and capable of preventing accidental releases.

The present invention has been described, for illustrative but non-limiting purposes, with reference to various preferred embodiments; it should be understood however that variations and/or modifications can be applied by a skilled person in the field without thereby departing from the relative protection scope, as defined in the enclosed claims.

## Claims

1. A shelf-supporting device (30) for the reversible connection of a shelf (200) to the opposite shoulders (300) of a piece of furniture, said device (30) being configured for being inserted inside a seat (201) formed within the thickness of said shelf (200) and comprising a main body (12) with which a pin (11) is slidingly associated, movable along a longitudinal axial direction (X) against the action of opposing means (M) between an advanced operating position wherein said pin (11) protrudes from said main body (12) and, when the device is assembled, from said shelf (200), so as to be able to be inserted into a housing seat (301) formed on one of said shoulders (300), and a retracted non-operating position wherein said pin (11) does not protrude from said main body (12) and from said shelf (200) when the device is assembled, or protrudes so as to be able to be in any case released from said housing seat (301) of said shoulder (300), wherein said pin (11) terminates with a free end or tip (P) comprising a tilted surface (Pa) suitable for cooperating with the entry edge of said seat (301), **characterized in that** it further comprises a bush (20) which can be fixedly inserted into said seat (201) formed within the thickness of said shelf (200), said main body (12) being in turn inserted into the axial cavity (22) of said bush (20) and being rotatable with respect to the same between a first operating position (A) which allows the coupling and uncoupling of the shelf (200) with respect to the shoulders (300) of the furniture, and a second blocking position (B) suitable for preventing the accidental disengagement of the shelf from the shoulders.

2. The shelf-supporting device (30) according to the previous claim, **characterized in that** in said first operating position (A), said tilted surface (Pa) of said pin (11) faces upwards, so as to cooperate with the upper entry edge (301') of said seat (301) and allow the disengagement of the shelf (200) from the shoulders (300) when said shelf (200) is pushed upwards and the pin (11) retracts due to the effect of the interaction between said tilted surface (Pa) and said upper edge (301') of said seat (301).

3. The shelf-supporting device (30) according to one or more of the previous claims, **characterized in that** in said second blocking position (B), said tilted surface (Pa) of said pin (11) is not facing upwards and is not capable of cooperating with the upper entry edge (301') of said seat (301) when said shelf (200) is pushed upwards.

4. The shelf-supporting device (30) according to the previous claim, **characterized in that** in said second blocking position (B), said tilted surface (Pa) of said pin (11) is tilted by about 90° with respect to said first operating position (A) so as to cooperate with the side entry edge (301") of said seat (301) and allow the disengagement of the shelf (200) from the shoulders (300) when said shelf (200) is moved horizontally and the pin (11) retracts due to the interaction between said tilted surface (Pa) and said side edge (301") of said seat (301) .

5. The shelf-supporting device (30) according to claim 3, **characterized in that** in said second blocking position (B), said tilted surface (Pa) of said pin (11) is tilted by about 45° with respect to said first operating position (A) so as to cooperate with the upper (301') and side (301") entry edges of said seat (301) and allow the shelf (200) to be disengaged from the shoulders (300) when said shelf (200) is moved tilted and obliquely.

6. The shelf-supporting device (30) according to the previous claim, **characterized in that** said bush and said main body (12) comprise positioning means for said main body (12) for the stable but reversible positioning of said main body (12) in said first operating position (A), said positioning means (23,13) being suitable for preventing the rotation of said main body (12) with respect to said bush (20).

7. The shelf-supporting device (30) according to the previous claim, **characterized in that** said positioning means comprise an engagement tooth (13) positioned on the outer surface of said main body (12) suitable for being inserted into an engagement seat (23) formed on the inner surface of said axial cavity (22) .

8. A combination of a shelf-supporting device (30) according to one or more of the previous claims and an assembly tool (40), **characterized in that** said main body (12) can be rotated with respect to said bush (20) fixedly associated with said shelf (200), by means of said tool (40) configured for gripping said tip (P) of said pin (11).

9. The combination according to the previous claim, **characterized in that** said tool (40) comprises at least a portion configured as a thin foil (41) in which a seat (42) is formed for housing said tip (P) of said pin (11), said thin foil (41) having a thickness suitable for allowing its insertion between the side (202) of said shelf (200) from which the shelf-supporting device (30) and the shoulder (300) of the furniture protrude, so as to rotate said main body (12) with respect to said bush (20) after said pin (11) has been inserted into said housing seat (301) formed in the shoulder (300).

10. A method for connecting a shelf (200) to the shoulders (300) of a piece of furniture, **characterized in that** it comprises the following steps:
- associating a plurality of shelf-supporting devices (30) according to one or more of claims 1 to 8, with said shelf (200);
- positioning said plurality of shelf-supporting devices (30) according to said first operating position (A) wherein said tilted surface (Pa) of said pin (11) is facing upwards;
- moving said shelf (200) with respect to said shoulder (300) so as to position each of said pins (11) of said shelf-supporting devices (30) in correspondence with the corresponding housing seat (301) formed in the shoulder (300) of the furniture, so that said opposing means (M) push the pin (11) into the seat (301);
- when the pin (11) is inserted in the corresponding housing seat (301) formed in the shoulder, rotating the main body (12) of at least one of said plurality of devices (30) with respect to the bush (20) bringing said pin (11) into said second blocking position (B).

11. A method for connecting a shelf (200) to the shoulders (300) of a piece of furniture, **characterized in that** it is achieved by means of a combination of a shelf-supporting device (30) and an assembly tool (40) according to claim 8 or 9, said rotation step of the main body (12) of said at least one shelf-supporting device (30) being effected by means of said tool (40) .

## Patentansprüche

1. Regalstützvorrichtung (30) zur reversiblen Verbindung eines Regals (200) mit den entgegengesetzten Schultern (300) eines Möbels, wobei die Vorrichtung (30) dazu konfiguriert ist, in einen Sitz (201) eingesetzt zu werden, der innerhalb der Dicke des Regals (200) gebildet ist und einen Hauptkörper (12) umfasst, dem ein Stift (11) gleitend zugeordnet ist, der entlang einer längsaxialen Richtung (X) gegen die Wirkung von entgegengesetzten Mitteln (M) zwischen einer vorgeschobenen Betriebsposition, in der der Stift (11) aus dem Hauptkörper (12), und, wenn die Vorrichtung zusammengebaut ist, aus dem Regalboden (200) derart herausragt, dass er in der Lage ist, in einen Gehäusesitz (301) eingesetzt zu werden, der an einer der Schultern (300) ausgebildet ist, und einer zurückgezogenen Ruhestellung, in der der Stift (11) nicht aus dem Hauptkörper (12) und aus dem Regalboden (200) herausragt, wenn die Vorrichtung zusammengebaut ist, beweglich ist, oder derart herausragt, dass er in jedem Fall aus dem Gehäusesitz (301) der Schulter (300) freigegeben werden kann, wobei der Stift (11) in einem freien Ende oder einer Spitze (P) endet, das/die eine geneigte Oberfläche (Pa) umfasst, die dazu geeignet ist, mit der Eintrittskante des Sitzes (301) zusammenzuwirken, **dadurch gekennzeichnet, dass** sie ferner eine Buchse (20) umfasst, die fest in den Sitz (201) eingesetzt werden kann, der innerhalb der Dicke des Regals (200) gebildet ist, wobei der Hauptkörper (12) seinerseits in den axialen Hohlraum (22) der Buchse (20) eingesetzt ist und in Bezug auf diesen zwischen einer ersten Betriebsposition (A), die das Koppeln und Entkoppeln des Regals (200) in Bezug auf die Schultern (300) des Möbels erlaubt, und einer zweiten Blockierungsposition (B), die dazu geeignet ist, das versehentliche Ausrücken des Regals aus den Schultern zu verhindern, drehbar ist.

2. Regalstützvorrichtung (30) nach dem vorstehenden Anspruch, **dadurch gekennzeichnet, dass** in der ersten Betriebsposition (A) die geneigte Oberfläche (Pa) des Stifts (11) nach oben gewandt ist, um mit der oberen Eintrittskante (301') des Sitzes (301) zusammenzuwirken und das Ausrücken des Regals (200) aus den Schultern (300) zu erlauben, wenn das Regal (200) nach oben gedrückt wird und sich der Stift (11) aufgrund der Wirkung der Wechselwirkung zwischen der geneigten Oberfläche (Pa) und der oberen Kante (301') des Sitzes (301) zurückzieht.

3. Regalstützvorrichtung (30) nach einem oder mehreren der vorstehenden Ansprüche, **dadurch gekennzeichnet, dass** die geneigte Oberfläche (Pa) des Stifts (11) in der zweiten Blockierungsposition (B) nicht nach oben gewandt und nicht in der Lage ist, mit der oberen Eintrittskante (301') des Sitzes (301) zusammenzuwirken, wenn das Regal (200) nach oben gedrückt wird.

4. Regalstützvorrichtung (30) nach dem vorstehenden Anspruch, **dadurch gekennzeichnet, dass** die geneigte Oberfläche (Pa) des Stifts (11) in der zweiten Blockierungsposition (B) um etwa 90° in Bezug auf die erste Betriebsposition (A) geneigt ist, um mit der Seiteneintrittskante (301") des Sitzes (301) zusammenzuwirken und das Ausrücken des Regals (200) aus den Schultern (300) zu erlauben, wenn das Regal (200) horizontal bewegt wird und sich der Stift (11) aufgrund der Wechselwirkung zwischen der geneigten Oberfläche (Pa) und der Seitenkante (301") des Sitzes (301) zurückzieht.

5. Regalstützvorrichtung (30) nach Anspruch 3, **dadurch gekennzeichnet, dass** in der zweiten Blockierungsposition (B) die geneigte Oberfläche (Pa) des Stifts (11) in Bezug auf die erste Betriebsposition (A) um etwa 45° geneigt ist, um mit der oberen (301') und seitlichen (301") Eintrittskante des Sitzes (301) zusammenzuwirken und zu erlauben, dass das Regal (200) aus den Schultern (300) freigegeben wird, wenn das Regal (200) geneigt und schräg bewegt wird.

6. Regalstützvorrichtung (30) nach dem vorstehenden Anspruch, **dadurch gekennzeichnet, dass** die Buchse und der Hauptkörper (12) Positionierungsmittel für den Hauptkörper (12) zum stabilen, aber reversiblen Positionieren des Hauptkörpers (12) in der ersten Betriebsposition (A) umfassen, wobei die Positionierungsmittel (23, 13) dazu geeignet sind, die Drehung des Hauptkörpers (12) in Bezug auf die Buchse (20) zu verhindern.

7. Regalstützvorrichtung (30) nach dem vorstehenden Anspruch, **dadurch gekennzeichnet, dass** die Positionierungsmittel einen Eingriffszahn (13) umfassen, der an der Außenoberfläche des Hauptkörpers (12) positioniert und dazu geeignet ist, in einen Eingriffssitz (23), der an der Innenoberfläche des axialen Hohlraums (22) gebildet ist, eingesetzt zu werden.

8. Kombination aus einer Regalstützvorrichtung (30) nach einem oder mehreren der vorstehenden Ansprüche und einem Zusammenbauwerkzeug (40), **dadurch gekennzeichnet, dass** der Hauptkörper (12) in Bezug auf die Buchse (20), die dem Regal (200) fest zugeordnet ist, mittels des Werkzeugs (40), das zum Ergreifen der Spitze (P) des Stifts (11) konfiguriert ist, gedreht werden kann.

9. Kombination nach dem vorstehenden Anspruch, **dadurch gekennzeichnet, dass** das Werkzeug (40) mindestens einen Abschnitt umfasst, der als eine dünne Folie (41) konfiguriert ist, in der ein Sitz (42) gebildet ist, um die Spitze (P) des Stifts (11) aufzunehmen, wobei die dünne Folie (41) eine Dicke aufweist, die dazu geeignet ist, ihr Einsetzen zwischen die Seite (202) des Regals (200), von der die Regalstützvorrichtung (30) vorsteht, und der Schulter (300) des Möbels zu erlauben, um den Hauptkörper (12) in Bezug auf die Buchse (20) zu drehen, nachdem der Stift (11) in den Gehäusesitz (301), der in der Schulter (300) gebildet ist, eingeführt wurde.

10. Verfahren zum Verbinden eines Regals (200) mit den Schultern (300) eines Möbelstücks, **dadurch gekennzeichnet, dass** es die folgenden Schritte umfasst:
- Zuordnen einer Vielzahl von Regalstützvorrichtungen (30) nach einem oder mehreren der Ansprüche 1 bis 8 zu dem Regal (200);
- Positionieren der Vielzahl von Regalstützvorrichtungen (30) gemäß der ersten Betriebsposition (A), wobei die geneigte Oberfläche (Pa) des Stifts (11) nach oben gewandt ist;
- Bewegen des Regals (200) in Bezug auf die Schulter (300), um jeden der Stifte (11) der Regalstützvorrichtungen (30) in Übereinstimmung mit dem entsprechenden Gehäusesitz (301), der in der Schulter (300) des Möbels ausgebildet ist, derart zu positionieren, dass die entgegengesetzten Mittel (M) den Stift (11) in den Sitz (301) drücken;
- wenn der Stift (11) in den entsprechenden Gehäusesitz (301), der in der Schulter ausgebildet ist, eingesetzt ist, Drehen des Hauptkörpers (12) von mindestens einer der Vielzahl von Vorrichtungen (30) in Bezug auf die Buchse (20), wodurch der Stift (11) in die zweite Blockierungsposition (B) gebracht wird.

11. Verfahren zum Verbinden eines Regals (200) mit den Schultern (300) eines Möbels, **dadurch gekennzeichnet, dass** es mittels einer Kombination einer Regalstützvorrichtung (30) und eines Zusammenbauwerkzeugs (40) nach Anspruch 8 oder 9 realisiert wird, wobei der Drehschritt des Hauptkörpers (12) der mindestens einen Regalstützvorrichtung (30) mittels des Werkzeugs (40) bewirkt wird.

## Revendications

1. Dispositif de support d'étagère (30) pour le raccordement réversible d'une étagère (200) aux épaulements opposés (300) d'un meuble, ledit dispositif (30) étant configuré pour être inséré à l'intérieur d'un siège (201) formé dans l'épaisseur de ladite étagère (200) et comprenant un corps principal (12) auquel une broche (11) est associée de manière coulissante, mobile le long d'une direction axiale longitudinale (X) contre l'action de moyens opposés (M) entre une position de fonctionnement avancée dans laquelle ladite broche (11) fait saillie dudit corps principal (12) et, lorsque le dispositif est assemblé, à partir de ladite étagère (200), de manière à pouvoir être inséré dans un siège de logement (301) formé sur l'un desdits épaulements (300), et une position de non-fonctionnement rétractée dans laquelle ladite broche (11) ne fait pas saillie dudit corps principal (12) et de ladite étagère (200) lorsque le dispositif est assemblé, ou fait saillie de manière à pouvoir être libérée dans tous les cas dudit siège de logement (301) dudit épaulement (300), dans laquelle ladite broche (11) se termine par un extrémité libre ou pointe (P) comprenant une surface inclinée (Pa) apte à coopérer avec le bord d'entrée dudit siège (301), **caractérisé en ce qu'**il comprend en outre une douille (20) qui peut être insérée de manière fixe dans ledit siège (201) formé dans l'épaisseur de ladite étagère (200), ledit corps principal (12) étant à son tour inséré dans la cavité axiale (22) de ladite douille (20) et étant rotatif par rapport à celle-ci entre une première position de fonctionnement (A) qui permet l'accouplement et le désaccouplement de l'étagère (200) par rapport aux épaulements (300) du meuble, et une deuxième position de blocage (B) apte à empêcher le dégagement accidentel de l'étagère des épaulements.

2. Dispositif de support d'étagère (30) selon la revendication précédente, **caractérisé en ce que** dans ladite première position de fonctionnement (A), ladite surface inclinée (Pa) de ladite broche (11) est orientée vers le haut, de manière à coopérer avec le bord d'entrée supérieur (301') dudit siège (301) et à permettre le dégagement de l'étagère (200) des épaulements (300) lorsque ladite étagère (200) est poussée vers le haut et que la broche (11) se rétracte en raison de l'effet de l'interaction entre ladite surface inclinée (Pa) et ledit bord supérieur (301') dudit siège (301).

3. Dispositif de support d'étagère (30) selon une ou plusieurs des revendications précédentes, **caractérisé en ce que** dans ladite deuxième position de blocage (B), ladite surface inclinée (Pa) de ladite broche (11) n'est pas orientée vers le haut et n'est pas capable de coopérer avec le bord d'entrée supérieur (301') dudit siège (301) lorsque ladite étagère (200) est poussée vers le haut.

4. Dispositif de support d'étagère (30) selon la revendication précédente, **caractérisé en ce que** dans ladite deuxième position de blocage (B), ladite surface inclinée (Pa) de ladite broche (11) est inclinée d'environ 90° par rapport à ladite première position de fonctionnement (A) de manière à coopérer avec le bord d'entrée latéral (301") dudit siège (301) et à permettre le dégagement de l'étagère (200) des épaulements (300) lorsque ladite étagère (200) est déplacée horizontalement et que la broche (11) se rétracte en raison de l'interaction entre ladite surface inclinée (Pa) et ledit bord latéral (301") dudit siège (301).

5. Dispositif de support d'étagère (30) selon la revendication 3, **caractérisé en ce que** dans ladite deuxième position de blocage (B), ladite surface inclinée (Pa) de ladite broche (11) est inclinée d'environ 45° par rapport à ladite première position de fonctionnement (A) de manière à coopérer avec les bords d'entrée supérieur (301') et latéral (301") dudit siège (301) et permettre à l'étagère (200) d'être dégagée des épaulements (300) lorsque ladite étagère (200) est déplacée de manière inclinée et oblique.

6. Dispositif de support d'étagère (30) selon la revendication précédente, **caractérisé en ce que** ladite douille et ledit corps principal (12) comprennent des moyens de positionnement pour ledit corps principal (12) pour le positionnement stable mais réversible dudit corps principal (12) dans ladite première position de fonctionnement (A), lesdits moyens de positionnement (23, 13) étant aptes à empêcher la rotation dudit corps principal (12) par rapport à ladite douille (20).

7. Dispositif de support d'étagère (30) selon la revendication précédente, **caractérisé en ce que** lesdits moyens de positionnement comprennent une dent d'engagement (13) positionnée sur la surface extérieure dudit corps principal (12) apte à être insérée dans un siège d'engagement (23) formé sur la surface intérieure de ladite cavité axiale (22).

8. Combinaison d'un dispositif de support d'étagère (30) selon une ou plusieurs des revendications précédentes et d'un outil d'assemblage (40), **caractérisée en ce que** ledit corps principal (12) peut être tourné par rapport à ladite douille (20) associée de manière fixe à ladite étagère (200), au moyen dudit outil (40) configuré pour saisir ladite pointe (P) de ladite broche (11).

9. Combinaison selon la revendication précédente, **caractérisée en ce que** ledit outil (40) comprend au moins une portion configurée comme une feuille mince (41) dans laquelle un siège (42) est formé pour loger ladite pointe (P) de ladite broche (11), ladite feuille mince (41) ayant une épaisseur apte à permettre son insertion entre le côté (202) de ladite étagère (200) à partir duquel le dispositif de support d'étagère (30) et l'épaulement (300) du meuble font saillie, de manière à faire tourner ledit corps principal (12) par rapport à ladite douille (20) après que ladite broche (11) ait été insérée dans ledit siège de logement (301) formé dans l'épaulement (300).

10. Procédé de raccordement d'une étagère (200) aux épaulements (300) d'un meuble, **caractérisé en ce qu'**il comprend les étapes suivantes consistant à :
- associer une pluralité de dispositifs de support d'étagère (30) selon une ou plusieurs des revendications 1 à 8, à ladite étagère (200) ;
- positionner ladite pluralité de dispositifs de support d'étagère (30) selon ladite première position de fonctionnement (A) dans laquelle ladite surface inclinée (Pa) de ladite broche (11) est orientée vers le haut ;
- déplacer ladite étagère (200) par rapport audit épaulement (300) de manière à positionner chacune desdites broches (11) desdits dispositifs de support d'étagère (30) en correspondance avec le siège de logement correspondant (301) formé dans l'épaulement (300) du meuble, de sorte que lesdits moyens opposés (M) poussent la broche (11) dans le siège (301) ;
- lorsque la broche (11) est insérée dans le siège de logement correspondant (301) formé dans l'épaulement, faire tourner le corps principal (12) d'au moins l'un de ladite pluralité de dispositifs (30) par rapport à la douille (20) en amenant ladite broche (11) dans ladite deuxième position de blocage (B).

11. Procédé de raccordement d'une étagère (200) aux épaulements (300) d'un meuble, **caractérisé en ce qu'**il est réalisé au moyen d'une combinaison d'un dispositif de support d'étagère (30) et d'un outil d'assemblage (40) selon la revendication 8 ou 9, ladite étape de rotation du corps principal (12) dudit au moins un dispositif de support d'étagère (30) étant effectuée au moyen dudit outil (40).
